# EUROPEAN PATENT APPLICATION

(11) **EP 1 429 061 A1**
(43) Date of publication of application: **16.06.2004**
(21) Application number: 03028161.2
(22) Date of filing: 08.12.2003
(51) Int. Cl.: F16K 21/06, F16K 31/60

(54) **Self-closing tap with adjustable dispensing time**

(30) Priority: 12.12.2002 IT MI20020578 U
(71) Applicant: Valpra by Rossi S.r.l., 28010 Fontaneto D'Agogna (Novara) (IT)
(72) Inventor: Rossi, Riccardo, 28024 Gozzano (Prov. of Novara) (IT); Rossi, Alberto, 28024 Gozzano (Prov. of Novara) (IT)
(74) Representative: Modiano, Guido, Dr.-Ing.

(57) **Abstract**

A self-closing tap with adjustable dispensing time, comprising a tap body (2) in which there is a chamber (3) that accommodates a timing cartridge (4) and is provided with an inlet that is connected to a water supply duct (5) and an outlet (6) that is connected to a dispensing port (7), the timing cartridge (4) comprising an actuation element (10) that is connected to a shaft (12) that protrudes from the tap body and can move axially on command in one direction to open the tap and automatically in the opposite direction to close the tap, the shaft being connected to a knob (16) for the actuation of the tap that is rigidly coupled to the shaft in its axial motion, means for adjusting the axial stroke of the shaft in the direction of translational motion that opens the tap being interposed between the actuation knob and tap body.

## Description

The present invention relates to a timed tap with adjustable dispensing time.

Timed taps, i.e., taps in which water dispensing is interrupted automatically a preset time after dispensing has been started by manually pressing an actuation knob, are known.

This kind of tap generally comprises a tap body in which there is a chamber provided with an inlet, connected to a water supply duct, and an outlet, connected to a water dispensing port, which is usually formed in the tap body or at the end of a spout that is connected to the tap body. This chamber accommodates a timing cartridge, in which there is an actuation element that is connected to a shaft, which in turn is connected to a flow control element that allows or interrupts the connection between the inlet and the outlet. This shaft protrudes from the tap body and is connected to the actuation knob. Said shaft can move along its own axis, together with the flow control element, in one direction in order to open the tap through a manual action applied to the actuation knob and automatically in the opposite direction in order to close the tap by way of elastic means that are controlled by the actuation element.

The actuation element is usually constituted by a piston that is rigidly coupled to the shaft or in any case is connected thereto in its translational motion along its own axis. Such actuation element is slideable inside a cylindrical timing chamber, which is formed inside the timing cartridge and can be filled by the water that enters the tap through the supply duct. By acting on the actuation knob, the flow control element is moved, opening the tap and simultaneously expelling the water contained in such timing chamber. The movement of the , shaft and of the flow control element in the opening direction is biased by a return spring that gradually moves the shaft, the flow control element and therefore the actuation element in the opposite direction with respect to the opening direction. However, this movement depends on the inflow of water into the timing chamber. The inflow of the water into the timing chamber is controlled by means of a gauged hole or through the infiltration of water through a gasket that is arranged around the actuation element provided as a piston. The opening time of the tap therefore depends on the diameter of the gauged hole or on the greater or smaller capacity of the gasket arranged around the actuation element provided as a piston to allow water to filter into the timing chamber.

In order to vary the opening time of the tap it is therefore necessary, in conventional timed taps, to replace the timing cartridge with a timing cartridge that has a gauged hole of a different diameter or a different capacity of the gasket arranged around the actuation element to allow water to filter into the timing chamber.

However, replacing the timing cartridge requires disassembly of the tap body by specialized personnel as well as the availability of several timing cartridges with different dispensing times.

The aim of the present invention is to obviate the drawbacks described above by providing a timed tap that allows to adjust at will the dispensing time without thereby requiring disassembly of the tap body or intervention of specialized personnel.

Within this aim, an object of the invention is to provide a timed tap that can use currently commercially available timing cartridges.

Another object of the invention is to provide a timed tap that is highly reliable in operation and can effectively withstand vandalism.

This aim and these and other objects that will become better apparent hereinafter are achieved by a timed tap, comprising a tap body in which there is a chamber that accommodates a timing cartridge and is provided with at least one inlet that is connected to a water supply duct and at least one outlet that is connected to a dispensing port, said timing cartridge comprising an actuation element that is connected to a shaft that protrudes from the tap body and can move axially on command in one direction to open the tap and automatically in the opposite direction to close the tap, said shaft being connected to a knob for the actuation of the tap that is rigidly coupled to said shaft in its axial motion, characterized in that between said actuation knob and said tap body there are interposed adjustment means for adjusting the axial stroke of said shaft in the direction that opens the tap.

Further characteristics and advantages of the invention will become better apparent from the detailed description of a timed tap according to the invention, illustrated by way of non-limiting example in the accompanying drawings, wherein:
Figure 1 is a partially sectional side elevation view of the tap according to the invention in the closed position, with a preset dispensing time;
Figure 2 is a partially sectional side elevation view of the tap in the open position with a dispensing time set as in Figure 1;
Figure 3 is a partially sectional side elevation view of the tap according to the invention in the closed position, with a set dispensing time that is different from the delivery time set in Figures 1 and 2;
Figure 4 is a partially sectional side elevation view of the tap according to the invention in the open position, with a dispensing time set as in Figure 3;
Figure 5 is an enlarged-scale exploded perspective view of a detail of the tap according to the invention;
Figure 6 is a view of a different possibility to connect the actuation knob to the shaft of the tap according to the invention.

With reference to the figures, the timed tap according to the invention, generally designated by the reference numeral 1, comprises a tap body 2 in which there is a chamber 3 that accommodates a timing cartridge 4 and is provided with at least one inlet, which is not shown in the figures but is connected in a manner known per se to a water supply duct 5, and at least one outlet 6, which is connected to a dispensing port 7.

In the tap shown in the figures, the dispensing port 7 is formed monolithically with the tap body 2, but it can also be formed in a manner known per se by a spout that is connected to the tap body 2.

The timing cartridge 4 comprises an enclosure 8 in which there is a timing chamber 9 that accommodates an actuation element 10. The timing chamber 9 is cylindrical and the actuation element 10 is provided as a piston that can slide along the timing chamber 9. The actuation element 10 is provided with a lip gasket 11 that can slide hermetically along the side walls of the timing chamber 9.

The actuation element 10 is monolithic, or in any case connected in its axial translational motion, with respect to a shaft 12 that protrudes from the tap body 2. The shaft 12 can move along its own axis 12a on command in one direction in order to open the tap and automatically in the opposite direction in order to close the tap.

More particularly, the illustrated timing cartridge 4 is provided with inlets 13 that are connected to the chamber 3 and with an outlet 14 that is formed in one of its end faces and is crossed by the shaft 12. A portion of the actuation element 10 is provided with a sealing gasket 15 that constitutes the flow control element of the tap, since as a consequence of the axial movement of the shaft 12 and of the actuation element 10 it provides or interrupts the connection between the inlets 13 and the outlet 14, as will become better apparent hereinafter.

The shaft 12 is connected to an actuation knob 16 that is rigidly coupled to the shaft 12 in its translational motion along its own axis 12a.

According to the invention, adjustment means for adjusting the axial stroke of the shaft 12 in its translational motion that causes the opening of the tap are interposed between the actuation knob 16 and the tap body 2.

More particularly, the actuation knob 16 is preferably provided with an axial shoulder 17 that can engage against an abutment 18 that is provided correspondingly on the tap body 2 at the end of the axial stroke of the shaft 12 and of the actuation knob 16 in the direction of translational motion that opens the tap. The distance of the shoulder 17 from the abutment 18 is adjustable by way of such adjustment means.

Preferably, the adjustment means comprise a threaded coupling that is provided between the actuation knob 16 and the shaft 12. The threaded coupling is coaxial to the shaft 12, and means 19 for locking said threaded coupling that can be activated or deactivated are provided.

More particularly, the threaded coupling comprises a threaded seat 20 that is formed in the actuation knob 16 and is coupled to a threaded portion 21 of the side wall of the shaft 12. The threaded portion 21 extends from the end of the shaft 12 that protrudes from the tap body 2.

The locking means 19 comprise a fastening screw 22 that passes with play through the threaded seat 20 and engages a threaded seat 24 that is formed coaxially in the end of the shaft 12 that protrudes from the tap body 2.

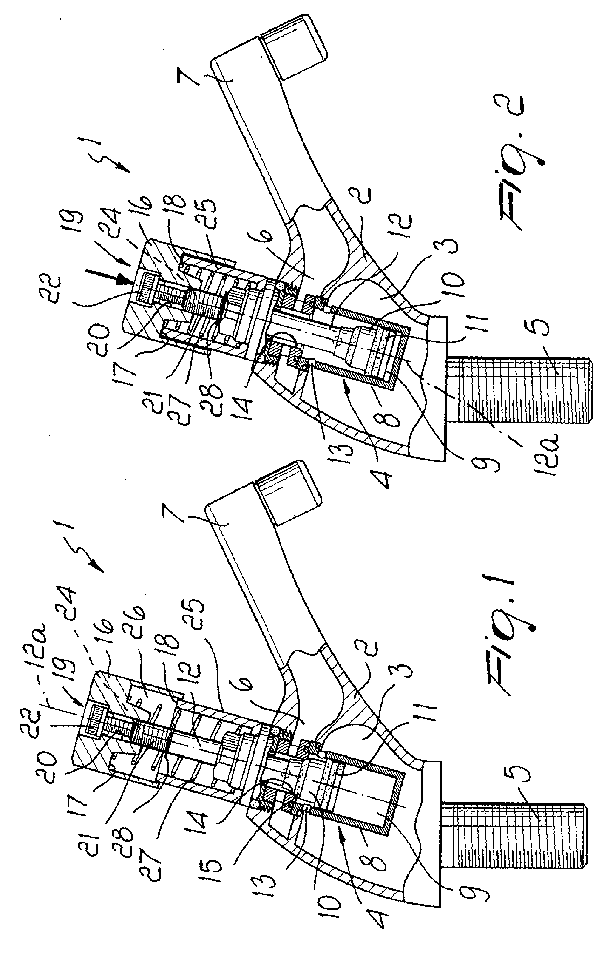

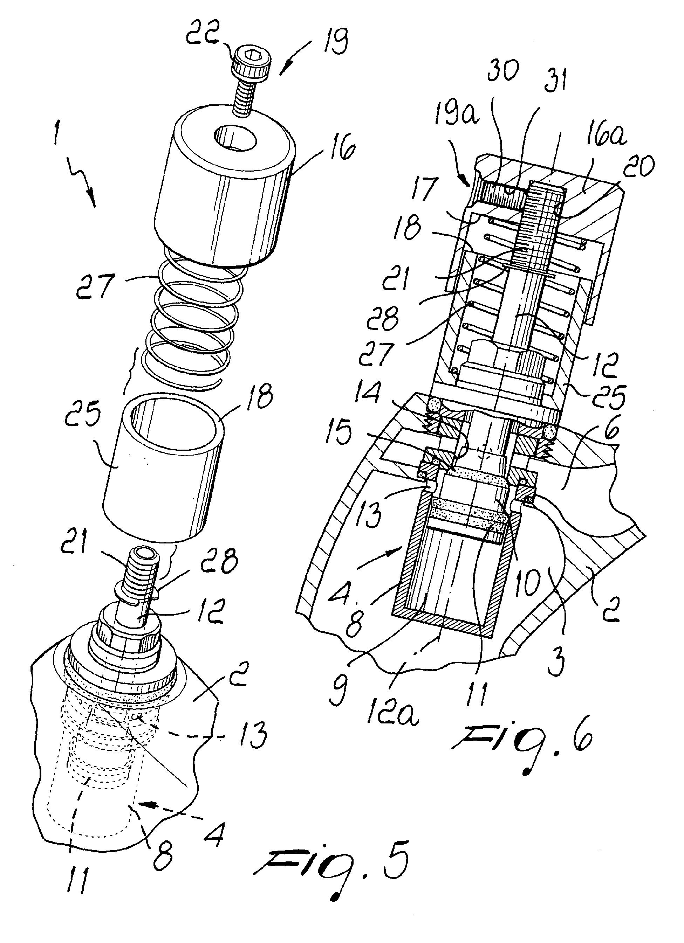

As an alternative, as shown in Figure 6, the locking means, designated in such figure by the reference numeral 19a, may also be constituted by a grub screw 30, which is coupled to a threaded seat 31 that is formed in the actuation knob 16a transversely to the shaft 12 and engages by abutment against the side wall of the shaft 12. In Figure 6, the other elements that have remained unchanged with respect to Figures 1 to 5 have been designated by the same reference numerals.

It should be noted that the head of the screw 22, as well as the head of the grub screw 30, have an actuation contour, in order to allow their screwing or unscrewing, that is preferably shaped like a recessed hexagon or has another shape so that they can be operated by means of an appropriate tool that is not easily available in order to avoid unwanted actions on the tap.

Preferably, the abutment 18 is formed by an axial end of a sleeve 25 that is connected to the tap body 2 and is arranged coaxially around the portion of the shaft 12 that protrudes from the tap body 2. The sleeve 25 protrudes, with the axial end that forms the abutment 18, into a cavity 26 that is provided in the actuation knob 16, and the bottom of said cavity 26, which faces the abutment 18, forms the axial shoulder 17.

Elastic means are interposed in a manner known per se between the body of the tap 2 and the actuation knob 16, are constituted for example by a spring 27, and contrast elastically the axial motion of the shaft 12 of the actuation knob 16 in the direction of translational motion that opens the tap.

The actuation knob 16 preferably has a substantially cylindrical shape and the cavity 26 runs coaxially in the actuation knob 16 starting from one of its axial ends.

On the portion of the shaft 12 that protrudes from the tap body 2 it is possible to provide an elastic ring 28 or in any case an axial shoulder that delimits the maximum stroke of the shaft 12 in the direction of translational motion that opens the tap.

The dispensing time can be adjusted by the possibility to move, by using the threaded coupling between the seat 20 and the threaded portion 21, the actuation knob 16 along the shaft 12, varying, in the closed position of the tap, the distance between the shoulder 17 and the abutment 18. The possibility to rotate the actuation knob 16 with respect to the shaft 12 during adjustment of the dispensing time is dependent on the partial unscrewing of the screw 22 or of the grub screw 30.

It should be noted that the figures illustrate a timing cartridge 4 in which the motion of the adjustment element in the tap closing direction is dependent on the infiltration of water into the timing chamber 9 through the gasket 11, but the timing cartridge 4 can be constituted by any timing cartridge of a known kind, for example a timing cartridge with a gauged hole.

Operation of the timed tap according to the invention is as follows.

When one wishes to have a maximum dispensing time, the screw 22 or the grub screw 30 is loosened and the knob 16 is turned with respect to the shaft 12 so that as a consequence of the threaded coupling provided between the knob 16 and the shaft 12, the knob 16 gradually moves along the shaft 12 away from the tap body 2 so as to increase the distance between the shoulder 17 and the abutment 18. The knob 16 is then locked, rigidly coupling it to the shaft 12, by tightening the screw 22 or the grub screw 30. At this point, starting from the closed position of the tap shown in Figure 1, pressing on the knob 16 causes the translational motion of the knob 16, of the shaft 12 and of the actuation element 10 along the axis 12a toward the inside of the tap body 2, consequently compressing the spring 27 and causing the evacuation of the water from the timing chamber 9 through the gasket 11, as shown in Figure 2. When the knob 16 is released, the elastic reaction of the spring 27 gradually moves in the opposite direction the knob 16, the shaft 12 and the actuation element 10. However, this movement is controlled by the return of water onto the timing chamber 9, which in the illustrated timing cartridge occurs by an infiltration of water through the gasket 11. When the portion of the actuation element 10 that acts as a flow control element engages with its gasket 15 against the sealing seat provided correspondingly in the tap, connection between the inlets 13 and the outlet 14 is interrupted and accordingly the dispensing of water on the part of the tap is interrupted.

It should be noted that when the actuation knob 16 is in the position that allows to utilize the maximum dispensing time, the stroke of the actuation knob 16 to achieve tap opening may optionally be delimited not by the engagement of the shoulder 17 against the abutment 18 but by the engagement of the elastic ring 28 against the tap body.

In any case, the delimitation of the stroke of the actuation knob 16 to achieve tap opening in the maximum dispensing time conditions is such as to avoid contact with the bottom of the timing chamber 9 on the part of the actuation element 10. In this manner one avoids effectively the possibility of damage to the tap as a consequence of excessive pressure on the knob 16. Thanks to this refinement, the tap according to the invention also offers excellent assurances of resistance to vandalism.

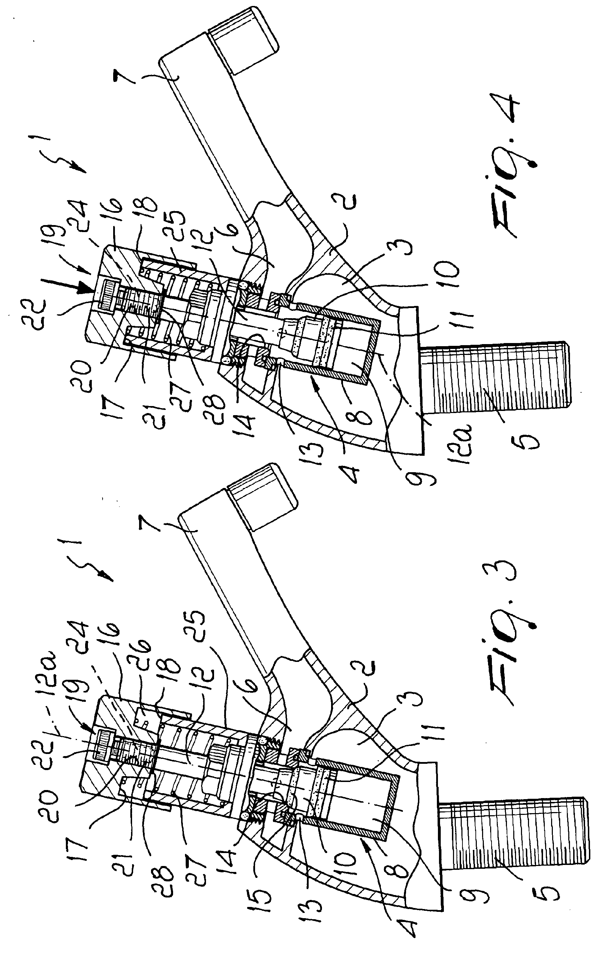

When one wishes to reduce the tap dispensing time, one partially unscrews the screw 22 or the grub screw 30 and one rotates the actuation knob 16 with respect to the shaft 12 in the direction of rotation that as a consequence of the threaded coupling that occurs between the actuation knob 16 and the shaft 12 causes the actuation knob 16 to move gradually along the shaft 12 toward the tap body 2. In this manner, the shoulder 17 is moved gradually toward the abutment 18. Once the intended arrangement of the actuation knob 16 has been performed, the screw 22 or the grub screw 30 is tightened again so as to rigidly couple the knob 16 and the shaft 12. Because the distance of the shoulder 17 from the abutment 18 has been reduced, as shown in Figures 3 and 4, when the actuation knob 16 is pressed toward the tap body 2 the stroke of said actuation knob 16, of the shaft 12 and of the actuation element 10 is shorter and therefore the time required by the actuation element 10 to return to the closed position is shorter and therefore the dispensing time is reduced.

In practice it has been found that the timed tap according to the invention fully achieves the intended aim, since it allows to vary the dispensing time without requiring any disassembly or replacement.

In practice, the materials used, as well as the dimensions, may be any according to requirements and to the state of the art.

The disclosures in Italian Utility Model Application No. MI2002U000578 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A timed tap, comprising a tap body in which there is a chamber that accommodates a timing cartridge and is provided with at least one inlet that is connected to a water supply duct and at least one outlet that is connected to a dispensing port, said timing cartridge comprising an actuation element that is connected to a shaft that protrudes from the tap body and can move axially on command in one direction to open the tap and automatically in the opposite direction to close the tap, said shaft being connected to a knob for the actuation of the tap that is rigidly coupled to said shaft in its axial motion, **characterized in that** between said actuation knob and said tap body there are interposed adjustment means for adjusting the axial stroke of said shaft in the direction that opens the tap.

2. The tap according to claim 1, **characterized in that** said actuation knob has an axial shoulder that can engage against an abutment that is provided correspondingly on said tap body at the end of the axial stroke of said shaft and of said actuation knob in the direction that opens the tap, the distance of said shoulder from said abutment being adjustable by way of said adjustment means.

3. The tap according to claims 1 and 2, **characterized in that** said adjustment means comprise a threaded coupling between said actuation knob and said shaft, said threaded coupling being rigidly coupled to said shaft, locking means for said threaded coupling that can be activated and deactivated being provided.

4. The tap according to one or more of the preceding claims, **characterized in that** said threaded coupling comprises a threaded seat that is formed in said actuation knob and couples to a threaded portion of the side wall of said shaft, said threaded portion extending from the end of said shaft that protrudes from said tap body.

5. The tap according to one or more of the preceding claims, **characterized in that** said locking means comprise an axial fastening screw that connects said actuation knob to said shaft.

6. The tap according to one or more of the preceding claims, **characterized in that** said locking means comprise a grub screw that mates with a threaded seat that is formed in said actuation knob transversely to said shaft and can engage by abutment against the side wall of said shaft.

7. The tap according to one or more of the preceding claims, **characterized in that** said abutment is formed by an axial end of a sleeve that is connected to said tap body and is arranged coaxially around the portion of said shaft that protrudes from the tap body, said sleeve protruding with said axial end into a cavity that is formed in said actuation knob and the bottom of said cavity that faces said abutment forming said axial shoulder.

8. The tap according to one or more of the preceding claims, **characterized in that** elastic means are interposed between said tap body and said actuation knob and contrast elastically the axial motion of said shaft and of said actuation knob in the direction that opens the tap.

9. The tap according to one or more of the preceding claims, **characterized in that** said actuation knob is substantially cylindrical, said cavity being arranged coaxially to said actuation knob starting from one of its axial ends.

10. The tap according to one or more of the preceding claims, **characterized in that** said timing cartridge comprises an enclosure inside which there is a substantially cylindrical timing chamber, said actuation element being provided as a piston that can slide axially along said timing chamber and facing the bottom of said timing chamber, means being provided which are adapted to avoid contact with the bottom of said timing chamber on the part of said actuation element during the axial sliding of said actuation element in the direction that opens the tap.

11. The tap according to one or more of the preceding claims, **characterized in that** said means adapted to avoid contact with the bottom of said timing chamber on the part of said actuation element are constituted by said axial shoulder and by said abutment.

12. The tap according to one or more of the preceding claims, **characterized in that** said means adapted to avoid contact with the bottom of said timing chamber on the part of said actuation element are constituted by an elastic ring that is associated with the portion of said shaft that protrudes from the tap body, said elastic ring being engageable against the tap body as a consequence of the axial movement of said shaft that opens the tap in order to delimit the maximum axial stroke allowed to said shaft.
